# EUROPÄISCHE PATENTANMELDUNG

(11) **EP 2 196 166 A1**
(43) Veröffentlichungstag der Anmeldung: **16.06.2010**
(21) Anmeldenummer: 09015110.1
(22) Anmeldetag: 07.12.2009
(51) Int. Cl.: A61C 13/00

(54) **Verfahren zur genauen Fertigung von Dentalkomponenten mit einem Sinter oder SLM Verfahren**

(30) Priorität: 09.12.2008 DE 102008060860
(71) Anmelder: Hintersehr, Josef, 64347 Griesheim (DE)
(72) Erfinder: Hintersehr, Josef, 64347 Griesheim (DE)
(74) Vertreter: Bill, Burkart Hartmut

(57) **Zusammenfassung**

Die Erfindung betrifft ein Verfahren zur Fertigung von Dentalkomponenten, wie zum Beispiel Zahnimplantaten, Zahnaufbauten, Zahnkronen und/oder Zahnbrückengerüsten, vor, welches folgende Schritte umfasst. Basierend auf Geometriedaten der Dentalkomponente wird ein dreidimensionales CAD-Modell bereitgestellt. Daraufhin wird ein Lasersinterverfahren bzw. Laserschmelzverfahren basierend auf dem CAD-Model. Im Anschluss an das Lasersinterverfahren bzw. Laserschmelzverfahren wird der hierdurch schichtenweise aufgebaute Dentalkomponentenkörper in einen Ofen zur Hitzebehandlung überführt, einer Hitzebehandlung unterworfen und anschließend abgekühlt. Nach erfolgter Abkühlung des Dentalkomponentenkörpers wird unter nochmaliger Nutzung des bereits bereitgestellten Satzes von Geometriedaten zur dreidimensionalen Beschreibung der gewünschten Dentalkomponente eine computergestützte Oberflächennachbehandlung, insbesondere eine Fräsung, des Dentalkomponentenkörpers durchgeführt.

## Beschreibung

Die Erfindung betrifft ein Verfahren zu Fertigung von Dentalkomponenten, wie z. B. von Implantaten, Zahnaufbauten, Zahnkronen, Zahnbrücken oder Zahnbrückengerüsten.

Es ist bekannt, zur Fertigung von Dentalkomponenten, wie z. B. von Implantaten, Zahnaufbauten, Zahnkronen, Zahnbrücken oder Zahnbrückengerüsten, je nach zu verarbeitendem Ausgangsmaterial und eingesetzter Temperatur Lasersinterverfahren oder Laserschmelzverfahren einzusetzen. Das Prinzip des Lasersinterns ("selectiv laser sintering"; SLS) beruht auf der Verfestigung durch lokales Versintern von Pulverpartikeln; beim Laserschmelzen ("selectiv laser melting"; SLM) werden diese Pulverpartikel lokal aufgeschmolzen. Durch den schichtweisen Aufbau des Körpers einer Dentalkomponente auf einer Bauplattform, sind diese Verfahren im Wesentlichen unabhängig von einer geometrischen Komplexität eines zu fertigenden Dentalkomponentenkörpers. Da die Verfahren des Lasersinterns und des Laserschmelzens an und für sich für den Fachmann auf diesem Gebiet bekannt sind, wird hierauf nicht weiter eingegangen.

Nach Beendigung des Lasersinterverfahren oder Laserschmelzverfahren wird der Dentalkomponentenkörper von der Bauplattform gelöst und vor Einsatz im Oralbereich als Dentalkomponente üblicherweise nochmals einer nicht unerheblichen Oberflächennachbehandlung unterzogen, insbesondere auch um Ungenauigkeiten während des schichtenweisen Aufbaus zu bereinigen.

Aufgabe der Erfindung ist es, bei der Fertigung von den Dentalkomponenten, welche ein Lasersinterverfahren oder Laserschmelzverfahren einsetzen, derzeit bestehende Fertigungstoleranzen weiter zu minimieren und die Effizienz während der Fertigung zu erhöhen.

Die Erfindung löst die Aufgabe überraschender Weise durch Gegenstände mit den Merkmalen nach anhängenden unabhängigen Ansprüchen. Bevorzugte und/oder vorteilhafte Weiterbildungen sind Gegenstand von Unteransprüche.

Die Erfindung schlägt demnach zur Lösung der Aufgabe ein Verfahren zur Fertigung von Dentalkomponenten, wie zum Beispiel Zahnimplantaten, Zahnaufbauten, Zahnkronen und/oder Zahnbrückengerüsten, vor, welches folgende Schritte umfasst.

Ein Satz von Geometriedaten wird computergestützt zur dreidimensionalen Beschreibung wenigstens einer gewünschten Dentalkomponente bereitgestellt, basierend auf diesen Geometriedaten wird ein dreidimensionales CAD-Modell der Dentalkomponente bereitgestellt. Anschließend werden von dem CAD-Modell durch Verarbeitung der Geometriedaten als Schichtdaten zahlreiche CAD-Modellschichten erzeugt, welche für die Anwendung eines Lasersinterverfahrens oder eines Laserschmelzverfahrens geeignet sind. Daraufhin wird das Lasersinterverfahren bzw. Laserschmelzverfahren basierend auf den Schichtdaten jeder einzelnen CAD-Modellschicht angewendet, wobei computergestützt auf eine Bauplattform ein pulverförmiger Werkstoff entsprechend schichtenweise aufgebracht wird. Im Anschluss an das Lasersinterverfahren bzw. Laserschmelzverfahren wird der hierdurch schichtenweise aufgebaute Dentalkomponentenkörper in einen Ofen zur Hitzebehandlung überführt, einer Hitzebehandlung unterworfen und anschließend abgekühlt. Nach erfolgter Abkühlung des Dentalkomponentenkörpers wird unter nochmaliger Nutzung des bereits bereitgestellten Satzes von Geometriedaten zur dreidimensionalen Beschreibung der gewünschten Dentalkomponente eine computergestützte Oberflächennachbehandlung, durch Erodieren oder insbesondere eine Fräsung, des Dentalkomponentenkörpers durchgeführt und erst nach Durchführen dieser Oberflächennachbehandlung der Dentalkomponentenkörper von der Bauplattform gelöst.

Wesentliche Vorteile der Erfindung bestehen somit darin, dass durch die dem Lasersinterverfahren bzw. Laserschmelzverfahren zunächst nachfolgende Hitzebehandlung mit anschließender Abkühlung eine Entspannung des Materialgefüges des Dentalkomponentenkörpers noch auf der Bauplattform erfolgt und, dass daraufhin eine Oberflächennachbehandlung des noch auf der Bauplattform befindlichen Dentalkomponentenkörper unter nochmaliger Nutzung der bereits zum Aufbau des CAD-Modells vorliegenden dreidimensionalen Geometriedaten und somit wiederum computergestützt und also im wesentlichen vollautomatisch und genau durchgeführt werden kann.

Eine daraufhin nach Lösen bzw. Trennen des Dentalkomponentenkörpers von der Bauplattform vorliegende Dentalkomponente weist folglich wesentlich geringere Fertigungstoleranzen auf und die Fertigung insgesamt erfolgt in effizienter Weise.

Im Rahmen der Erfindung liegen die Alternativen, den Satz von computergestützt zur dreidimensionalen Beschreibung wenigstens einer gewünschten Dentalkomponente bereitgestellten Geometriedaten erstmalig aufzubauen oder auf einen bereits aufgebauten Satz zurückzugreifen, das basierend auf diesen Geometriedaten bereitgestellte dreidimensionale CAD-Modell der Dentalkomponente erstmalig aufzubauen oder bereits auf ein zuvor aufgebautes zurückzugreifen, die Erzeugung der CAD-Modellschichten durch Verarbeitung der Geometriedaten als Schichtdaten erstmalig durchzuführen oder auf bereits zuvor erzeugte Modellschichten zurückzugreifen.

Um die Erfindung für eine vielfältige Anzahl von unterschiedlichen Dentalkomponenten zweckmäßig zu nutzen, ist ferner bevorzugt vorgesehen, anwendungsspezifisch für den Aufbau einen Satzes dreidimensionalen Geometriedaten ein Intraorales Scanverfahren und/oder ein extraorales Digitalisierungsverfahren einzusetzen.

Um die Erfindung in noch effizienter Weise einzusetzen, ist ferner vorgesehen, dass der auf der Bauplattform aufgebaute Dentalkomponentenkörper aus eine Vielzahl von Dentalkomponenten-Subkörper besteht, wobei jeder Subkörper auf einem Untersatz von dreidimensionalen Geometriedaten einer Dental-Einzelkomponente beruht und der Satz von dreidimensionalen Geometriedaten aus dieser Vielzahl von Untersätzen aufgebaut wird.

Anwendungsspezifisch hat es sich ferner als vorteilhaft erwiesen, wenn im Rahmen der Erfindung als pulverförmiges Werkstoffmaterial für den Aufbau eines Dentalkomponentenkörpers ein Kunststoff, ein Kunststoff beschichteter Form Sand, ein Metall- oder ein Keramik pulver eingesetzt wird.

Die Erfindung schlägt somit ferner eine Dentalkomponente vor, welche nach einem Verfahren nach einem der vorstehenden Ansprüche hergestellt ist.

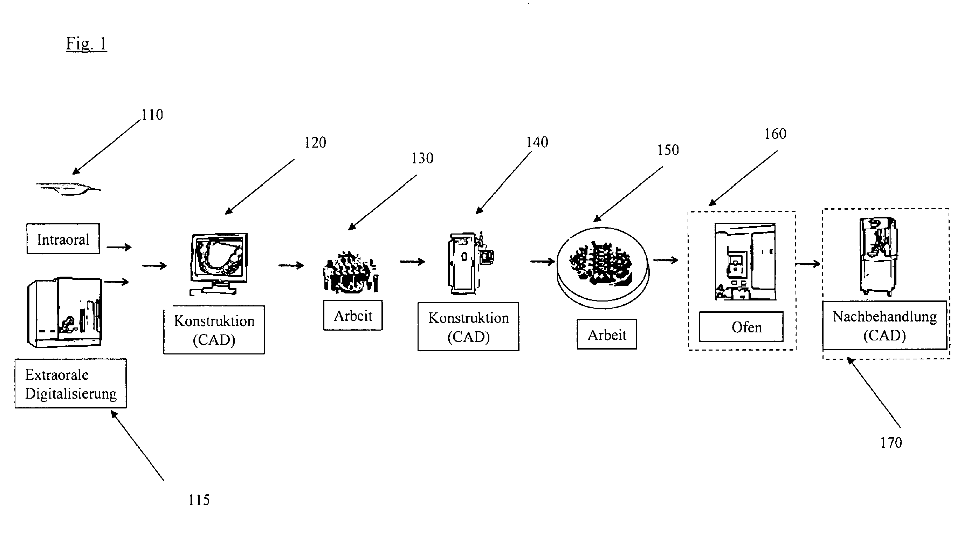

Die Erfindung wird nachfolgend anhand eines in der Figur 1 beispielhaft dargestellten Ablaufschemas näher beschrieben, welche beispielhaft einzelne Schritte während eines Verfahrens zur Fertigung einer Dentalkomponente nach der Erfindung stark schematisiert darstellt.

In einem ersten Verfahrensschritt wird wenigstens ein Satz von dreidimensionalen Geometriedaten wenigstens einer gewünschten Dentalkomponente gewonnen bzw. bereitgestellt. Hierzu kann ein intraorales Scanverfahren 110 eingesetzt werden, z. B. mittels eines im Oralbereich geführten Laser-Scangeräts, der häufig stiftartig ausgebildet ist und im Oralbereich erfasste Mess- bzw. Scandaten des Kiefers oder von Zähnen etc. an eine CAD basierte Datenverarbeitungsanlage überträgt, die die gewonnen Kiefer- und/oder Zahndaten computergestützt zum Aufbau eines CAD-Modells (computer aided design-Modells) einer gewünschten Dentalkomponente, wie einem Implantat und - aufbau einer Zahnkrone oder Zahnbrücke und Zahnbrückengerüst, und zur Erzeugung der CAD-Modellschichten zu von innerhalb eines Lasersinterverfahrens oder Laserschmelzverfahrens verwendbaren Schichtdaten verarbeitet 120. Ergänzend oder alternativ können derartige Kiefer- und/oder Zahndaten auch durch ein extraorale Digitalisierungsverfahren 115 außerhalb des oralen Bereichs gewonnen werden, beispielsweise in dem zunächst ein Gipsabdruck eines Kiefers, Gebisses oder Zahnes genommen wird und durch extraorale Vermessung dieses Abdruckes oder eines daraufhin gefertigten Modell basierend die notwendigen Daten gewonnen werden.

Nach Verarbeitung der bereitgestellten dreidimensionalen Daten in Schichtendaten und nachfolgende Erstellung eines computergestützten Modells durch Anwendung eines computergestützten Modellierungsverfahrens 120 werden die Schichtdaten des CAD-Modells 130 der wenigstens einen Dentalkomponente einer weiteren CAD-gestützten Datenverarbeitungsanlage zugeführt, die ausgebildet ist ein Lasersinterverfahren oder Laserschmelzverfahren 140 durchzuführen.

Im Rahmen der Erfindung liegen die Alternativen, den Satz von computergestützt zur dreidimensionalen Beschreibung wenigstens einer gewünschten Dentalkomponente bereitgestellten Geometriedaten erstmalig aufzubauen oder auf einen bereits aufgebauten Satz zurückzugreifen, das basierend auf diesen Geometriedaten bereitgestellte dreidimensionale CAD-Modell der Dentalkomponente erstmalig aufzubauen oder bereits auf ein zuvor aufgebautes zurückzugreifen, die Erzeugung der CAD-Modellschichten durch Verarbeitung der Geometriedaten als Schichtdaten erstmalig durchzuführen oder auf bereits zuvor erzeugte Modellschichten zurückzugreifen.

Wie aus der Fig.1 ersichtlich, kann das CAD-Modell und folglich auch die Schichtdaten des CAD-Modells 130 eine Vielzahl von Dentalkomponenten-Subkörper umfassen, wobei jeder Subkörper auf einem Untersatz von dreidimensionalen Geometriedaten einer Dental-Einzelkomponente beruht und der Satz von dreidimensionalen Geometriedaten dementsprechend aus dieser Vielzahl von Untersätzen aufgebaut wurde.

Während des Lasersinterverfahrens oder Laserschmelzverfahren 140 durch die CAD-gestützten Datenverarbeitungsanlage, wird basierend auf den Schichtdaten jeder einzelnen CAD-Modellschicht computergestützt auf einer Bauplattform, die der CAD-gestützten Datenverarbeitungsanlage als Komponententräger aufnehmbar ist, ein pulverförmiger Werkstoff entsprechend schichtenweise zum Aufbau eines dreidimensionalen Körpers der gewünschten Dentalkomponente aufgebracht.

Als pulverförmiges Werkstoffmaterial, welches auf der Bauplattform zur Fertigung des Dentalkomponentenkörpers schichtenweise aufgebracht wird, hat sich ein Kunststoffmaterial, ein Kunststoff beschichteter Formsatz, ein Metall- oder ein Keramikpulver als zweckmäßig erwiesen.

Im vorliegenden Fall wird folglich als Dentalkomponentenkörper eine Vielzahl von Dentalkomponenten-Subkörper auf der Bauplattform aufgebracht.

Nach Beendigung des Lasersinterverfahrens bzw. Laserschmelzverfahrens wird der hieraus resultierende Dentalkomponentenkörper zunächst mit samt der Bauplattform als Zwischenprodukt 150 einem Ofen zur Wärmebehandlung zugeführt 160 mit welchem durch Hitzebehandlung des Zwischenprodukts 150 eine Entspannung des Materialgefüges bewirkt wird. Nach anschließendem Abkühlen wird daraufhin unter Zuhilfenahme des ursprünglich für die gewünschte Dentalkomponente bereitgestellten oder aufgebauten Satzes von dreidimensionalen Geometriedaten eine CAD-gestützte Oberflächennachbehandlung, zweckmäßigerweise insbesondere durch Erodierung oder durch Fräsung, durchgeführt 170. Erst nach dieser Oberflächennachbehandlung wird der Dentalkomponentenkörper von der Bauplattform getrennt, so dass die Dentalkomponente oder auch die Vielzahl von Dental-Einzelkomponenten daraufhin in gefertigtem Zustand für den Einsatz im Oralbereich vorliegt.

## Patentansprüche

1. Verfahren zur Fertigung von Dentalkomponenten, wie zum Beispiel Zahnimplantaten, Zahnaufbauten, Zahnkronen und/oder Zahnbrückengerüsten, umfassen folgende Schritte:
Computergestütztes Bereitstellen eines Satzes von Geometriedaten zur dreidimensionalen Beschreibung wenigstens einer Dentalkomponente,
basierend auf diesen bereitgestellten Geometriedaten, computergestütztes Bereitstellen eines dreidimensionales CAD-Modells der Dentalkomponente,
Erzeugen zahlreicher CAD-Modellschichten von dem CAD-Modell durch Verarbeitung der Geometriedaten als Schichtdaten, welche für die Anwendung eines Lasersinterverfahrens oder eines Laserschmelzverfahrens geeignet sind,
basierend auf den Schichtdaten jeder einzelnen CAD-Modellschicht, Anwendenden des Lasersinterverfahrens bzw. Laserschmelzverfahren, wobei computergestützt auf eine Bauplattform ein pulverförmiger Werkstoff entsprechend schichtenweise aufgebracht wird,
im Anschluss an das Lasersinterverfahren bzw. Laserschmelzverfahren wird der Dentalkomponentenkörper zusammen mit der Bauplattform in einen Ofen zur Hitzebehandlung überführt,
Durchführen einer Hitzebehandlung an dem Dentalkomponentenkörper zusammen mit der Bauplattform
Abkühlen des zusammen mit der Bauplattform zuvor hitzebehandelten Dentalkomponentenkörpers,
nach erfolgter Abkühlung des zuvor hitzebehandelten Dentalkomponentenkörpers, computergestütztes Durchführen einer Oberflächennachbehandlung, insbesondere einer Erodierung oder einer Fräsung, des Dentalkomponentenkörpers unter nochmaliger Nutzung des bereits bereitgestellten Satzes von Geometriedaten zur dreidimensionalen Beschreibung der gewünschten Dentalkomponente, und
nach Durchführung dieser Oberflächennachbehandlung Trennen bzw. Lösen des Dentalkomponentenkörpers von der Bauplattform.

2. Verfahren nach vorstehendem Anspruch, **dadurch gekennzeichnet,**
**dass** der Satz von computergestützt zur dreidimensionalen Beschreibung wenigstens einer gewünschten Dentalkomponente bereitgestellten Geometriedaten erstmalig aufgebaut wird oder für diesen Satz von Geometriedaten auf einen bereits aufgebauten Satz zurückzugegriffen wird,
**dass** das basierend auf diesen Geometriedaten bereitgestellte dreidimensionale CAD-Modell der Dentalkomponente erstmalig aufgebaut wird oder für das CAD-Modell bereits auf ein zuvor aufgebautes zurückzugegriffen wird, und/oder
**dass** die Erzeugung der CAD-Modellschichten durch Verarbeitung der Geometriedaten als Schichtdaten erstmalig durchgeführt wird oder für die Erzeugung der CAD-Modellschichten auf bereits zuvor erzeugte Modellschichten zurückzugegriffen wird.

3. Verfahren nach einem der vorstehenden Ansprüche, **dadurch gekennzeichnet, dass** zur Bereitstellung des Satzes der dreidimensionalen Geometriedaten ein Intraorales Scanverfahren eingesetzt wird.

4. Verfahren nach einem der vorstehenden Ansprüche, **dadurch gekennzeichnet, dass** zur Bereitstellung des Satzes der dreidimensionalen Geometriedaten ein extraorales Digitalisierungsverfahren eingesetzt wird.

5. Verfahren nach einem der vorstehenden Ansprüche, **dadurch gekennzeichnet, dass** der auf der Bauplattform aufgebaute Dentalkomponentenkörper aus eine Vielzahl von Dentalkomponenten-Subkörper besteht, wobei jeder Subkörper auf einem Untersatz von dreidimensionalen Geometriedaten einer Dental-Einzelkomponente beruht und der Satz von dreidimensionalen Geometriedaten aus dieser Vielzahl von Untersätzen aufgebaut wird.

6. Verfahren nach einem der vorstehenden Ansprüche **dadurch gekennzeichnet, dass** als pulverförmiges Werkstoffmaterial ein Kunststoff, ein Kunststoffbeschichteter Formsand, ein Metall- oder ein Keramikpulver eingesetzt wird.

7. Dentalkomponente, welche nach einem Verfahren nach einem der vorstehenden Ansprüche hergestellt ist.
